# EUROPEAN PATENT APPLICATION

(11) **EP 2 090 548 A1**
(43) Date of publication of application: **19.08.2009**
(21) Application number: 08300083.6
(22) Date of filing: 11.02.2008
(51) Int. Cl.: C02F 1/78, A61L 2/10, B01F 3/04, C02F 101/30, C02F 103/00

(54) **Foamable wastewater treatment using high concentrated ozonated water**

(71) Applicant: L'AIR LIQUIDE, Société Anonyme pour l'Etude et l'Exploitation des Procédés Georges Claude, 75007 Paris (FR)
(72) Inventor: Ogawa, Satoko, Tsukuba Ibaraki 300-4247 (JP); Sun, Xulin, Tsukuba Ibaraki 300-4247 (JP)
(74) Representative: Conan, Philippe Claude

(57) **Abstract**

In this invention disclosure, new method to treat foamable wastewater by ozone without foam is showed. By mixing of highly concentrated ozonated water, foamable wastewater, e.g. dialysis wastewater, can be treated without foaming whereas too much stable foam is generated in the case of ozone gas bubbling. No foam formation and effectiveness of ozone of highly concentrated ozonated water were confirmed by chemical and biological experiments.

## Description

The invention relates to a method of treatment of waste water, which contains organic wastes.

Waste waters namely, industrial waste waters and more specifically waste waters from the food and pharmaceutical industries, medical waste waters and urban waste waters are known to generate the formation of foam during their post-used treatment, which decreases the productivity of the waste water treatment equipment. Wastewater is often treated by ozone. However in the case of foamable wastewater, foam is easily formed and the foam becomes a problem. The foam causes a problem because the volume of the foam on the surface of the waste water is an ineffective usage of the waste water treatment reactor. The pumping and dispensing of the foamed waste water makes the treatment more difficult. The foam also can not be released to sewage and river due to regulations.

For example, in the area of haemodialysis waste liquid treatment, Japanese patent Application laid open (KOKAI) 14,947/2001 discloses a waste water treatment system, wherein the wastewater is mixed with ozone water in a treatment tank, I, order to decompose urea and protein using ozone water. Thought high reactivity of ozone water is described, no foam reduction is mentioned. European patent application publication EP 1 386 625 A discloses a dialysis wastewater treatment system using Ozone in order to kill bacteria in water but no mention of foam reduction is made.

According to one embodiment, the present invention, the invention thus relates to a method to inhibit the foam formation in waste water treatment using highly concentrated ozonated water.

According to a more specific embodiment, the invention concerns a process to treat foamable waste water comprising the following steps:
A preparation step a) of a highly concentrated ozonated water, wherein ozone is let bubble in water under pressure to form said highly concentrated ozonated water;
A mixing step b) of said highly concentrated ozonated water with said waste water to be treated, under pressure;
The process as hereinabove defined improves the waste treatment yield and allows use smaller apparatus, which generates less capital investment.

In the process as hereinbefore defined, foamable waste water, mainly means industrial waste waters and more specifically waste waters from the food and pharmaceutical industries, medical waste waters such as haemodialysis apparatus waste waters and urban waste waters, which are able to generate foam because of the presence of organic compounds such as surfactants, urea, proteins and/or partially or totally hydrolysed proteins.

In the process as hereinbefore defined, highly concentrated ozonated water means an ozonated water wherein the concentration of dissolved ozone is greater or equal to 25 mg/L, more specifically greater or equal to 50 mg/L and still more specifically greater or equal to 75 mg/L.

According to a more specific embodiment, the ozonated water is saturated with ozone and according to a still more specific embodiment the ozonated water is over saturated with ozone.

In the process as hereinabove defined, under pressure means greater or equal to 0.001 MPA, more specifically greater or equal to 0.1 MPa and still more specifically greater or equal to 0.5 MPa.

In Step a) of the hereinabove defined process, highly concentrated ozonated water is prepared by using ozone microbubble and pressurized conditions. Microbubble is prepared by combined method of bubble-breaking by pump and gas dissolution under pressure in a pump. Compared with millisize bubbles, highly concentrated ozonated water can be prepared at short times, effectively and by using small set up (short distance). It means that rising speed of microbubbles is much slower than that of millibubbles and that the total surface area of the inter-surface of gas and liquid of microbubbles is larger than that of millibubbles using same amount of gas. Therefore microbubbles can dissolved in water quickly and it does not need higher tank for gas dissolution as before.

In addition to that, off gas can be decreased thanks to microbubbles high dissolution ability. This saturated or over saturated ozonated water is slight blue colour and it is easy to check the dissolution process by visual observation without measurement of dissolved ozone.

According to a more specific embodiment, the invention concerns a method of treatment of wastewater coming from haemodialysis apparatus, in order to inhibit foam formation as well as to disinfect said waste water, comprising the following steps:
A preparation step a) of a highly concentrated ozonated water, wherein ozone is let bubble in water under pressure to form said highly concentrated ozonated water;
A mixing step b) of said highly concentrated ozonated water with said waste water to be treated, under pressure.

In the more specific process as hereinbefore defined, highly concentrated ozonated water means an ozonated water wherein the concentration of ozone is greater or equal to 25 mg/L, more specifically greater or equal to 50 mg /L and still more specifically greater or equal to 75 mg/L.

According to a more specific embodiment, the ozonated water is saturated with ozone and according to a still more specific embodiment the ozonated water is over saturated with ozone.

In the process as hereinabove defined, under pressure means greater or equal to 0.001 MPA, more specifically greater or equal to 0.1 MPa and still more specifically greater or equal to 0.5 MPa.

According to another embodiment the invention concerns the use of highly concentrated ozonated water to inhibit foam formation during waste water treatment.

Figures, Experiments and results are hereunder explained.

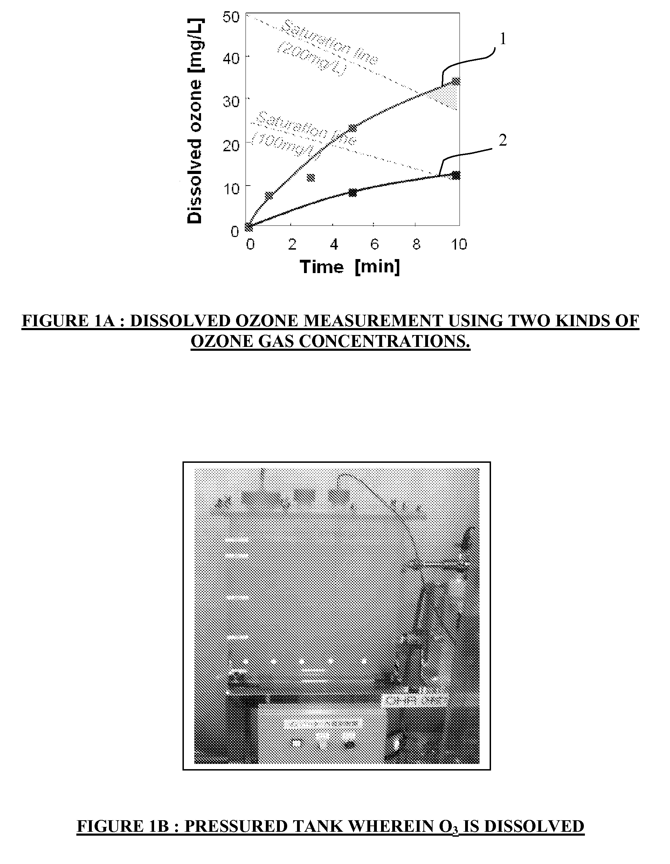

Figure 1A is a graphic representation of the dissolved ozone measurement with time. The dot lines represent the saturate dissolved ozone concentration calculated, which is compensated with temperature because the water temperature increased for a batch test (25° C to 35°C in 10 min). The dissolved ozone concentration depends on dosing ozone concentration in gas. The green line (Line 1) represents the change of dissolved ozone concentration with time when the dosing ozone concentration in gas is 200 mg/L, while the blue line (Line 2) represents the change of dissolved ozone concentration with time when the dosing ozone concentration is 100mg/L

Figure 1B is photography of the pressurized tank, wherein ozone is dissolved in water.

Figure 2 is a schematic representation of the waste water treatment installation.

At experiments, two points were confirmed; No foam formation and effectiveness of ozone.

For these experiments, artificial dialysis wastewater is used as representative of foamable wastewater. The results are the following

### 1) No foam formation

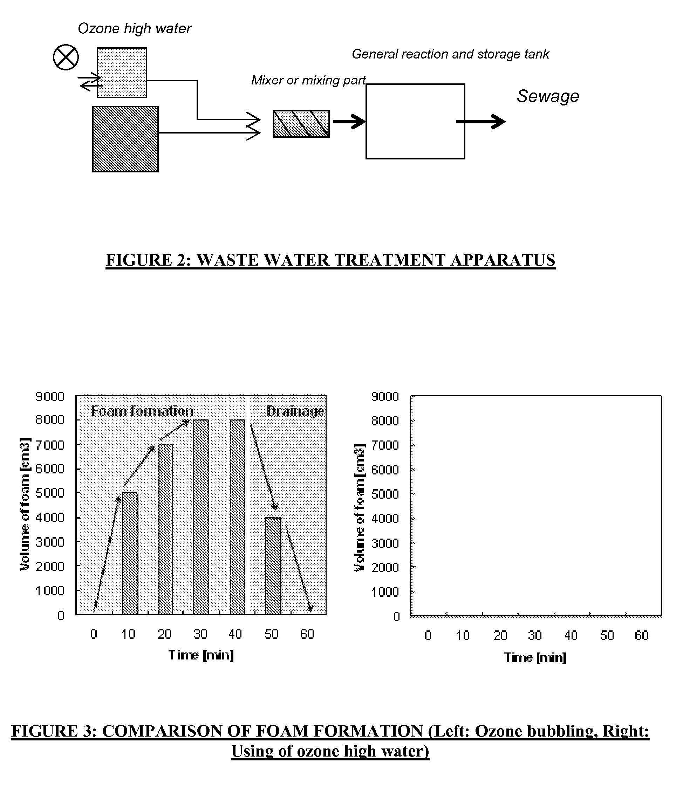

To confirm no foam formation, comparative experiments were conducted. One is by mixing highly concentrated ozonated water and the other is using ozone gas bubbling. In the case of highly concentrated ozonated water mixing, foam is not formed whereas too much foam is formed in the case of ozone gas bubbling (Figure 3). When the concentration of the waste water is double, no foam is also formed.

### 2) Effectiveness of ozone

To confirm ozone effectiveness in this new method, chemical and biological experiments were conducted.

### i) Chemical validation

Three kinds of waste water with different concentrations (WW1, WW2, WW3) were prepared. By mixing 250 ml of highly concentrated ozonated water (concentration: 9.03 mg O₃ /litrer) with 500 ml waste water during 10 minutes, COD reduction is measured. The results are shown in the following table:

| | WW1 | WW2 | WW3 |
|---|---|---|---|
| Initial COD (Cr) [mg/l] | 161 | 4100 | 7000 |
| COD value After mixing [mg/l] | 106 | 800 | 2000 |
| COD reduction value by dilution [mg/l] | 107 | 2700 | 4700 ⁵ |
| COD reduction value by 03 water [mg/l] | 1 | 1900 | 2700 |

The experimental results show that COD is reduced without dilution and highly concentrated ozonated water works for COD reduction. Moreover the results also show that a sample which has higher COD value is treated more than a sample which has lower COD value. This suggests that in high concentrated wastewater, dissolved zone can react with object substance in a high ratio.

### ii) Biological validation

Two kinds of bacteria contained buffer solutions were prepared and mixed with highly concentrated ozonated water. 250, 125 or 62.5ml of highly concentrated ozonated water is mixed with 500ml of bacteria contained buffer solution at one time (WW4, WW5, WW6; WW7, WW8, WW9). Mixing time is 10 min. A concentration of the highly concentrated ozonated water is around saturation (ca. 9.7mg/l).

In the case of a 104 cfu/ml bacteria concentration, all bacteria were killed by using 1/2∼1/8 amount of highly concentrated ozonated water; the results are shown in the following table:

| | WW4 | WW5 | WW6 |
|---|---|---|---|
| Amount of O₃ water [ml] | 250 | 125 | 62.5 |
| Initial Number of Bacteria [cfu / ml] | 1.5∼2.0 x 10⁴ | | |
| Total Number of Bacteria killed [cfu] | 1.5∼2.0 x 10⁴, LRV=4 | | |
| Number of Bacteria killed / 1ml 03 water [cfu] | >80 | >160 | >320 |

In the case of 106 cfu / ml bacteria concentration, the results are shown in the following table:

| | WW7 | WW8 | WW9 |
|---|---|---|---|
| Amount of O₃ water [ml] | 250 | 125 | 62.5 |
| Initial Number of Bacteria [cfu / ml] | 8.0 x 10⁶ | | |
| Total Number of Bacteria killed [cfu] | 7.3x10⁶ | 7.0x10⁶ | 6.3x10⁶ |
| Number of Bacteria killed / 1ml 03 water [cfu] | 2.9x10⁴ | 5.6x10⁴ | 10x10⁴ |

In any experiments, 104∼105 cfu of bacteria can be killed by 1 ml of highly concentrated ozonated water.

From these results, it is confirmed that highly concentrated ozonated water can treat foamable wastewater without foaming. Since the ozone is mixed with the ozone water, rather than mixed with gas, it is possible that ozone water can be used for the other applications, if necessary during the wastewater treatment, ex. the hygiene of the treated water easily if necessary.

## Claims

1. Process to treat foamable waste water comprising the following steps:
A preparation step a) of a high concentrated ozonated water, wherein ozone is let bubble in water under pressure to form said highly concentrated ozonated water;
A mixing step b) of said high concentrated ozonated water with said waste water to be treated, under pressure.

2. Process according to Claim 1, wherein highly concentrated ozonated water is saturated or over-saturated.

3. Method of treatment of dialysis wastewater coming from haemodialysis apparatus, in order to inhibit foam formation as well as to disinfect said waste water, comprising the following steps:
A preparation step a) of a high concentrated ozonated water, wherein ozone is let bubble in water under pressure to form said highly concentrated ozonated water;
A mixing step b) of said high concentrated ozonated water, with said waste water to be treated, under pressure.

4. Process according to Claim 3, wherein highly concentrated ozonated water is saturated or over-saturated.

5. Use of high concentrated ozonated water to inhibit foam formation during waste water treatment.
